# EUROPEAN PATENT APPLICATION

(11) **EP 4 617 109 A1**
(43) Date of publication of application: **17.09.2025**
(21) Application number: 25150678.8
(22) Date of filing: 08.01.2025
(51) Int. Cl.: B60L 53/31, H02G 11/00

(54) **SWING-ARM CABLE-MANAGEMENT DEVICE**

(30) Priority: 11.03.2024 US 202463563510 P; 11.11.2024 TW 113143093
(71) Applicant: Delta Electronics, Inc., Taoyuan City 33370 (TW)
(72) Inventor: Lee, Yu-Chin, 32063 Taoyuan City (TW); Hsieh, Hung-Sheng, 32063 Taoyuan City (TW)
(74) Representative: Uexküll & Stolberg

(57) **Abstract**

A swing-arm cable-management device (1, 1a, 1b, 1c, 1d) is provided and includes a mounting base (10), a first arm (20), a second arm (30), a guiding module (33), a sliding component (40, 40a, 40b) and a clamp component (60). The mounting base (10) is mounted on a charging machine (9). The first arm (20) is pivotally connected to the mounting base (10) through a first pivot shaft (C1) perpendicular to the ground, and allowed to rotate relative to the mounting base (10). The second arm (30) is pivotally connected to the first arm (20) through a second pivot shaft (C2) perpendicular to the ground, and allowed to rotate relative to the first arm (20). The guiding module (33) is disposed on the second arm (30) and slopped to increase height along a horizontal direction from rear end to the front end. The sliding component (40, 40a, 40b) is slidably disposed on the guiding module (33). The clamp component (60) is connected to the sliding component (40, 40a, 40b) and fastens a charging cable (91), so as to manage the charging cable (91) effectively.

## Description

### FIELD OF THE INVENTION

The present disclosure relates to a cable-management device, and more particularly to a swing-arm cable-management device holding an electric vehicle charging cable by connecting a clamp component to a sliding component on a sloped guiding module and combining a swing arm, for managing the electric vehicle charging cable when in use and idle, and avoiding damage to the charging cable and the charging gun head.

### BACKGROUND OF THE INVENTION

With the continuous development and progress of science and technology, the vehicles on the current market have changed from the traditional gasoline vehicles to the electric vehicles. As time goes by, the number of electric vehicles is increasing. Since the electric vehicles only need to charge the batteries disposed thereon to start on the road, and the conversion of electrical energy is produced without the pollution, so it has a good environmental protection effect.

On the other hand, the charging machines are used for producing the charging process of electric vehicles, and the number of charging machines, such as the upright charging machines or the wall-mounted charging machines on the current market is increasing. Those types of charging machines often have a very long charging cable, so that the charging gun can be expanded to the charging port of the electric vehicle through the charging cable for charging.

However, most of the current charging machines are not equipped with a cable management device, so it is laborious to hold the charging gun. Even if there are charging machines equipped with the cable management devices, counterweights and pulleys are used to manage the cables merely. Therefore, the overall system is heavier, larger in size, and has a complex internal structure. Moreover, when retracting the charging cable, the charging gun may accidentally fall to the ground, causing the damage to the charging gun.

Therefore, there is a need of providing a swing-arm cable-management device holding an electric vehicle charging cable by connecting a clamp component to a sliding component on a sloped guiding module and combining a swing arm, so as to manage the electric vehicle charging cable when in use and idle, avoid damage to the charging cable and the charging gun head, and obviate the drawbacks encountered from the prior arts.

### SUMMARY OF THE INVENTION

It is an object of the present disclosure to provide a swing-arm cable-management device holding an electric vehicle charging cable by connecting a clamp component to a sliding component on a sloped guiding module and combining a swing arm, so as to manage the electric vehicle charging cable when in use and idle, avoid damage to the charging cable and the charging gun head.

It is another object of the present disclosure to provide a swing-arm cable-management device. By connecting a clamp component to a sliding component disposed on a sloped guiding module and disposing the sloped guiding module on a multi-section swing arms with torsion springs, a basic function of expanded support for the charging gun and the charging cable is achieved. It also provides the function of automatically returning the charging gun and charging cable to avoid damage to the charging gun and charging cable. When the charging gun is not in use, the multi-section swing arms of the swing-arm cable-management device is folded to a minimum length through the action of the torsion springs. At the same time, the sliding component connected to the clamp component of the charging cable and slidably disposed on the sloped guiding module is automatically returned by the gravity action of the charging cable, and moved to the lowest point of the sloped guiding module, thereby driving the charging cable to an initial status with the smallest footprint. On the other hand, when the user uses the charging gun to pull the charging cable, the clamp component of the charging cable drives the sliding component to move to the highest point of the sloped guiding module, and at the same time the multi-section swing arms are fully expanded, so that the charging gun can be used to charge the electric vehicle in the charging operation easily. When the user has finished the operation of the charging gun, he only needs to release the charging gun. The gravity of the charging cable drives the sliding component to automatically return to the lowest point of the sloped guiding module through the clamp component. The multi-section swing arm is folded and merged as the minimum length through the action of the torsion spring, so that the charging cable and the charging gun are moved back to the initial status. With the swing-arm cable-management device of the present disclosure, no matter whether the multi-section swing arms are unfolded or folded, the charging gun and the charging cable will not touch the ground. It reduces the risk of damage to the charging gun and the charging cable. In addition, it allows to add a limiting mechanism for limiting a rotation angle of the first arm and the second arm, or add buffering elements for providing a buffering function between the first arm and the second arm. Compared with the conventional cable management device that uses counterweights and pulleys merely, the multi-section arm-folding structure constructed by the multi-section swing arms is significantly reduced in both volume and weight. It not only simplifies the structure, but also reduces the cost. The present disclosure includes the industrial applicability and the inventive steps.

In accordance with another aspect of the present disclosure, a swing-arm cable-management device is provided and includes a mounting base, a first arm, a second arm, a guiding module, a sliding component and a clamp component. The mounting base is configured to be mounted on a lateral wall of a charging machine. The first arm includes a first end and a second end opposite to each other, wherein the first end is pivotally connected to the mounting base through a first pivot shaft perpendicular to the ground, so that the first arm is allowed to rotate relative to the mounting base around the first pivot shaft. The second arm includes a third end and a fourth end opposite to each other, wherein the third end is pivotally connected to the second end of the first arm through a second pivot shaft perpendicular to the ground, so that the second arm is allowed to rotate relative to the first arm through the second pivot shaft. The guiding module is disposed on the second arm and slopped to increase height along a horizontal direction from third end to the fourth end, wherein the guiding module comprises a rear end and a front end opposite to each other, and the rear end is disposed adjacent to the third end and lower than the front end disposed adjacent to the fourth end. The sliding component is slidably disposed on the guiding module. The clamp component is connected to the sliding component and configured to fasten a charging cable of the charging machine, wherein when the charging cable is idle, the clamp component is pulled downwardly to drive the sliding component to move to the rear end of the guiding module due to a gravity action of the charging cable, wherein when the charging cable is in use and expanded by a charging gun, the clamp component is pulled away from the mounting base to drive the sliding component to move to the front end of the guiding module due to a pull action on the charging gun.

In an embodiment, the charging machine is disposed on a ground and the lateral wall of the charging machine is perpendicular to the ground, the mounting base is mounted on the lateral wall of the charging machine and located adjacent to a top of the charging machine, and the charging cable is connected between the lateral wall of the charging machine and the charging gun.

In an embodiment, the swing-arm cable-management device further includes at least one torsion spring, wherein the at least one torsion spring is disposed around the first pivot shaft or/and the second pivot shaft and configured to provide an elastic restoring force to keep the first arm and the second arm fold in an initial statue.

In an embodiment, when the clamp component on the first arm is pulled downwardly to drive the sliding component to move to the rear end of the guiding module due to the gravity action of the charging cable, the first arm and the second arm are folded and attached to the lateral wall of the charging machine, wherein when the clamp component is pulled away from the mounting base to drive the sliding component to move to the front end of the guiding module due to the pull action on the charging gun, the first arm and the second arm are unfolded in a front of the charging machine.

In an embodiment, the first arm and the second arm are an elongated hollow frame, respectively.

In an embodiment, the guiding module includes two guiding grooves, the two guiding grooves pass through two opposite walls of the second arm, the sliding component is located between the two guiding grooves and includes a horizontal shaft and two fastening nuts, and the horizontal shaft and the two fastening nuts are configured to install the sliding component on the guiding module.

In an embodiment, the elongated hollow frame of the second arm includes a bottom opening, wherein the sliding component is placed between two guiding grooves of the guiding module and comprises a horizontal shaft, and the horizontal shaft passes through the two guiding grooves of the guiding module and a central axis of the sliding component, wherein two ends of the horizontal shaft are limited by two fastening nuts, and the two fastening nuts are located outside two opposite walls of the elongated hollow frame, respectively, so that the sliding component is slidably disposed on the guiding module.

In an embodiment, the sliding component and the clamp component are connected through a rope, and the rope passes through the bottom opening.

In an embodiment, the rope is wound on the sliding component and includes an end fixed to the clamp component and another end fixed to the third end of the second arm.

In an embodiment, the rope is wound on the sliding component and includes two ends fixed to the clamp component.

In an embodiment, the elongated hollow frame of the second arm includes a bottom opening, wherein the guiding module includes a tubular guiding rail obliquely embedded in the second arm, and the sliding component comprises a pulley set slidably disposed in the tubular guiding rail.

In an embodiment, the sliding component and the clamp component are connected through a rope, and the rope passes through the bottom opening.

In an embodiment, the elongated hollow frame of the second arm includes a bottom opening, wherein the guiding module includes a guiding rod obliquely embedded in the second arm, and the sliding component is slidably sleeved on the guiding rod and connected to the clamp component through the bottom opening.

In an embodiment, the sliding component and the clamp component are connected through a rope, and the rope passes through the bottom opening.

In an embodiment, the swing-arm cable-management device further includes a limiting mechanism, wherein the limiting mechanism is disposed between the second end of the first arm and the third end of the second arm, and configured to limit rotation angle of the first arm and the second arm.

In an embodiment, the swing-arm cable-management device further includes a buffering element, wherein the buffering element is disposed between the mounting base and the first end and between the fourth end and the first end, and configured to provide a buffering function for collisions when the first arm is folded relative to the mounting base and the second arm is folded relative to the first arm.

In an embodiment, the swing-arm cable-management device further includes a buffering element, wherein the buffering element is disposed between the second end and the third end, and configured to provide a buffering function for collisions when the second arm is unfolded relative to the first arm.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a schematic exterior view illustrating a swing-arm cable-management device applied to a charging machine when the charging cable is idle according to a first embodiment of the present disclosure;
FIG. 2 is a lateral view illustrating the swing-arm cable-management device applied to the charging machine when the charging cable is idle according to the first embodiment of the present disclosure;
FIG. 3 is a schematic exterior view illustrating the swing-arm cable-management device applied to the charging machine when the charging cable is expanded in use according to the first embodiment of the present disclosure;
FIG. 4 is a lateral view illustrating the swing-arm cable-management device applied to the charging machine when the charging cable is expanded in use according to the first embodiment of the present disclosure;
FIG. 5 is a structural perspective view illustrating the sliding component and the clamp component connected through the rope according to the first embodiment of the present disclosure;
FIG. 6 is a schematic exploded view illustrating the sliding component installed on the guiding module according to the first embodiment of the present disclosure;
FIG. 7 schematically shows the swing-arm cable-management device operated at the initial status according to the first embodiment of the present disclosure;
FIG. 8 schematically shows the swing-arm cable-management device operated at the transitional status according to the first embodiment of the present disclosure;
FIG. 9 schematically shows the swing-arm cable-management device operated at the fully expanded status according to the first embodiment of the present disclosure;
FIG. 10 schematically shows the swing-arm cable-management device having torsion springs disposed around the first pivot shaft according to the first embodiment of the present disclosure;
FIG. 11 is a structural perspective view illustrating a sliding component and a clamp component connected through a rope according to a second embodiment of the present disclosure;
FIG. 12 is a schematic exploded view illustrating the sliding component installed on the guiding module according to the second embodiment of the present disclosure;
FIG. 13 schematically shows the swing-arm cable-management device operated at the initial status according to the second embodiment of the present disclosure;
FIG. 14 schematically shows the swing-arm cable-management device operated at the transitional status according to the second embodiment of the present disclosure;
FIG. 15 schematically shows the swing-arm cable-management device operated at the fully expanded status according to the second embodiment of the present disclosure;
FIG. 16 is an internal structural perspective view illustrating a sliding component connected to a clamp component through a rope and installed in a guiding module according to a third embodiment of the present disclosure;
FIG. 17 is a lateral view illustrating the swing-arm cable-management device operated at the initial status according to the third embodiment of the present disclosure;
FIG. 18 schematically shows the swing-arm cable-management device having the limiting mechanism disposed around the second pivot shaft;
FIG. 19 schematically shows the swing-arm cable-management device having the buffering element and operated at the initial status;
FIG. 20 schematically shows the swing-arm cable-management device having the buffering element and operated at the fully expanded status;
FIG. 21 schematically shows a swing-arm cable-management device operated at the initial status according to a fourth embodiment of the present disclosure;
FIG. 22 is an internal structural perspective view illustrating the sliding component connected to the clamp component through a rope and installed in a guiding module according to the fourth embodiment of the present disclosure;
FIG. 23 is a lateral view illustrating the swing-arm cable-management device operated at the initial status according to the fourth embodiment of the present disclosure;
FIG. 24 schematically shows the swing-arm cable-management device operated at the transitional status according to the fourth embodiment of the present disclosure;
FIG. 25 schematically shows the swing-arm cable-management device operated at the transitional status from another perspective according to the fourth embodiment of the present disclosure;
FIG. 26 schematically shows the swing-arm cable-management device operated at the fully expanded status according to the fourth embodiment of the present disclosure;
FIG. 27 schematically shows a swing-arm cable-management device operated at the initial status according to a fifth embodiment of the present disclosure;
FIG. 28 is an internal structural perspective view illustrating the sliding component connected to the clamp component and installed in the guiding module according to the fifth embodiment of the present disclosure;
FIG. 29 is a lateral view illustrating the swing-arm cable-management device operated at the initial status according to the fifth embodiment of the present disclosure;
FIG. 30 schematically shows the swing-arm cable-management device operated at the transitional status according to the fifth embodiment of the present disclosure; and
FIG. 31 schematically shows the swing-arm cable-management device operated at the fully expanded status according to the fifth embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "upper," "lower," "front," "rear" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments.

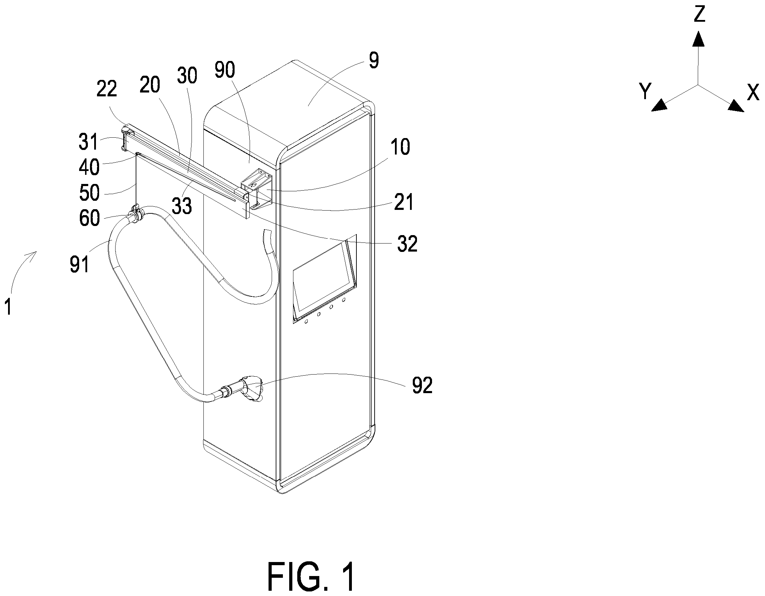

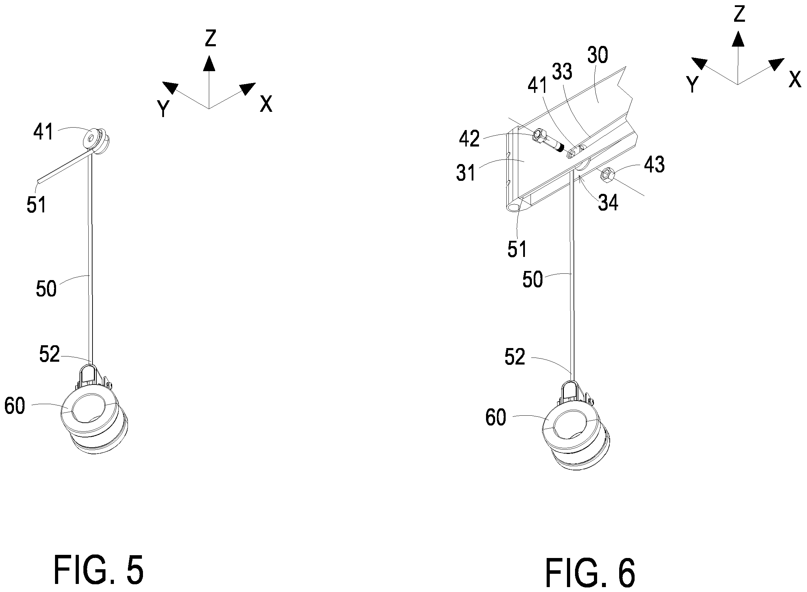

Referring to FIG. 1 to FIG. 9. The present disclosure provides a swing-arm cable-management device 1 is provided and applied to a charging machine 9. In the embodiment, the swing-arm cable-management device 1 includes a mounting base 10, a first arm 20, a second arm 30, a guiding module 33, a sliding component 40 and a clamp component 60. The mounting base 10 is configured to be mounted on a lateral wall 90 of a charging machine 9. The first arm 20 has a first end 21 and a second end 22 opposite to each other. The first end 21 is pivotally connected to the mounting base 10 through a first pivot shaft C1 perpendicular to the ground, so that the first arm 20 is allowed to rotate relative to the mounting base 10 around the first pivot shaft C1. The second arm 30 has a third end 31 and a fourth end 32 opposite to each other. The third end 31 is pivotally connected to the second end 22 of the first arm 20 through a second pivot shaft C2 perpendicular to the ground, so that the second arm 30 is allowed to rotate relative to the first arm 20 through the second pivot shaft C2. The guiding module 33 is disposed on the second arm 30 and slopped to increase height along a horizontal direction, such as the X axial direction, from third end 31 to the fourth end 32. The guiding module 33 includes a rear end and a front end opposite to each other, and the rear end is disposed adjacent to the third end 31 and lower than the front end disposed adjacent to the fourth end 32. The sliding component 40 is slidably disposed on the guiding module 33. The clamp component 60 is connected to the sliding component 40 through a rope 50, and configured to fasten a charging cable 91 of the charging machine 9. When the charging cable 91 is idle, the clamp component 60 is pulled downwardly to drive the sliding component 40 to move to the rear end of the guiding module 33 due to the gravity action of the charging cable 91, and the first arm 20 and the second arm 30 are folded in the rear of the mounting base 10. When the charging cable 91 is in use and expanded by a charging gun 92, the clamp component 60 is pulled away from the mounting base 10 to drive the sliding component 40 to move to the front end of the guiding module 33 due to the pull action on the charging gun 92, and the first arm 20 and the second arm 30 are unfolded in front of the mounting base 10.

In the embodiment, the charging machine 9 is disposed on the ground and the lateral wall 90 of the charging machine 9 is perpendicular to the ground. Preferably but not exclusively, the mounting base 10 is mounted on the lateral wall 90 of the charging machine 9 and located adjacent to the top of the charging machine 9. The charging cable 91 is connected between the lateral wall 90 of the charging machine 9 and the charging gun 92. Preferably but not exclusively, the rear end of the charging cable 91 is disposed adjacent to the mounting base 10, and the front end of the charging cable 91 is connected to the charging gun 92. Moreover, the middle section of the charging cable 91 is fastened and sleeved by the clamp component 60. The charging gun 92 is received on a seat under the mounting base 10 and the rear end of the charging cable 91 when idle. In this way, the charging cable 91 and the charging gun 92 are managed efficiently by the swing-arm cable-management device 1 of the present disclosure. Certainly, the arrangements of the charging cable 91 and the charging gun 92, the length of the charging cable 91 are adjustable according to the practical requirements, and the present disclosure is not limited thereto. Notably, the method of the clamp component 60 fastening the charging cable 91 is adjustable according to the practical requirements. The present disclosure is not limited thereto and not redundantly described herein.

Preferably but not exclusively, the first arm 20 and the second arm 30 includes an elongated hollow frame, respectively to form the housing thereof. In the embodiment, the first arm 20 and the second arm 30 are pivotally connected to each other through the second pivot shaft C2 to form a swing-arm structure. In other embodiments, a plurality of arms are pivotally connected to form a multi-section swing-arm structure. Certainly, the number of the pivoted arms is adjustable according to the practical requirements, and the present disclosure is not limited thereto. By connecting the clamp component 60 to the sliding component 40 disposed on the sloped guiding module 33 and disposing the sloped guiding module 33 on the front of the multi-section swing arms, a basic function of expanded support for the charging gun 92 and the charging cable 91 is achieved, and it also provides the function of automatically returning the charging gun 92 and charging cable 91 to avoid damage to the charging gun 92 and charging cable 91.

As shown in FIG. 1, FIG. 2 and FIG. 7, when the charging gun 92 is not in use, the first arm 20 and the second arm 30 of the swing-arm cable-management device 1 are folded to a minimum length due to the gravity action of the charging cable 91. Moreover, the sliding component 40 connected to the clamp component 60 fastening the charging cable 91 and slidably disposed on the guiding module 33 is automatically returned by the gravity action of the charging cable 91. At this time, the sliding component 40 is moved to the lowest point of the sloped guiding module 33, and the charging cable 91 is hold in an initial status with the smallest footprint. Preferably but not exclusively, when the first arm 20 and the second arm 30 of the swing-arm cable-management device 1 are folded due to the gravity action of the charging cable 91, the first arm 20 and the second arm 30 are overlapped with each other and attached to the lateral wall 90 of the charging machine 9, so that the swing-arm cable-management device 1 has the minimum length about 80 cm, with the smallest footprint.

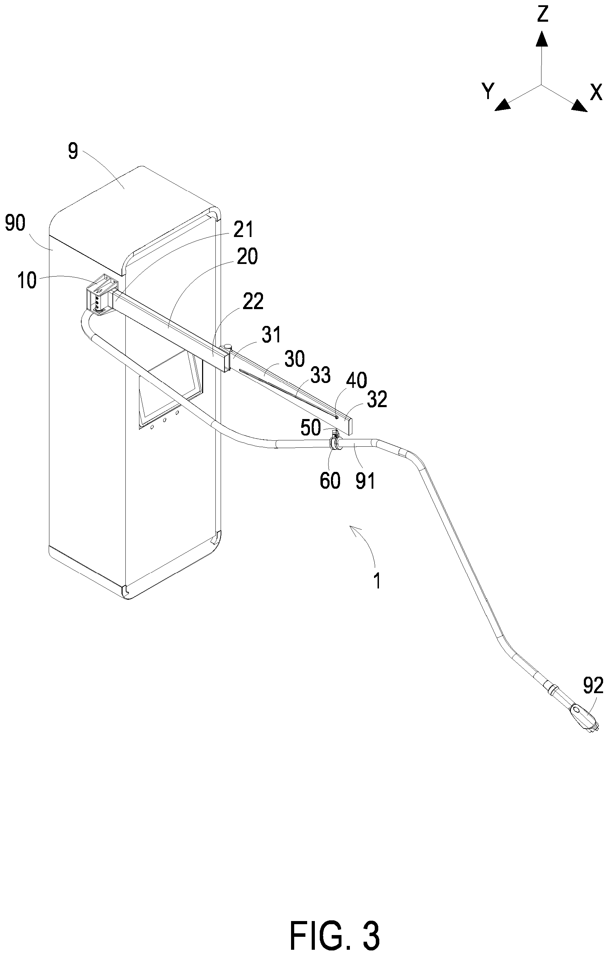

As shown in FIG. 3, FIG. 4, FIG. 8 and FIG. 9, when the user uses the charging gun 92 to pull the charging cable 91, the clamp component 60 fastening the charging cable 91 drives the sliding component 40 to move to the highest point of the sloped guiding module 33, and at the same time the first arm 20 and the second arm 30 are fully expanded. Preferably but not exclusively, the first arm 20 and the second arm 30 are unfolded in the front of the charging machine 9, so that the charging gun 92 can be used to charge the electric vehicle (not shown) in the charging operation easily.

In the embodiment, when the user has finished the operation of the charging gun 92, he only needs to release the charging gun 92. The gravity of the charging cable 91 drives the sliding component 40 to automatically return to the lowest point of the sloped guiding module 33 through the clamp component 60. The first arm 20 and the second arm 30 are folded and merged as the minimum length through the gravity action of the charging cable 91, so that the charging cable 91 and the charging gun 92 are moved back to the initial status, as shown in FIG. 1, FIG. 2 and FIG. 7. With the swing-arm cable-management device 1 of the present disclosure, no matter whether the multi-section swing arms are unfolded or folded, the charging gun 92 and the charging cable 91 will not touch the ground.

Referring to FIG. 1 to FIG. 9 again, in the embodiment, the guiding module 33 includes two guiding groove passing through the two opposite walls of the elongated hollow frame of the second arm 30. The main body 41 of the sliding component 40 is located between the two guiding grooves. Moreover, the sliding component 40 includes a horizontal shaft 42 and two fastening nuts 43, which are configured to install the main body 41 of the sliding component 40 on the guiding module 33. Preferably but not exclusively, in the embodiment, the elongated hollow frame of the second arm 30 further includes a bottom opening 34. For installing the sliding component 40 on the guiding module 33, the main body 41 of the sliding component 40 is placed between the two guiding grooves of the guiding module 33, the horizontal shaft 42 passes through the two guiding grooves of the guiding module 33 and the main body 41 along the central axis of the sliding component 40 in the horizontal direction, and then two ends of the horizontal shaft 42 are limited by the two fastening nuts 43 outside the opposite walls of the elongated hollow frame, so that the sliding component 40 is slidably disposed on the guiding module 33. Certainly, in other embodiments, the types of the guiding module 33 and the installation of the sliding component 40 are adjustable according to the practical requirements, and the present disclosure is not limited thereto.

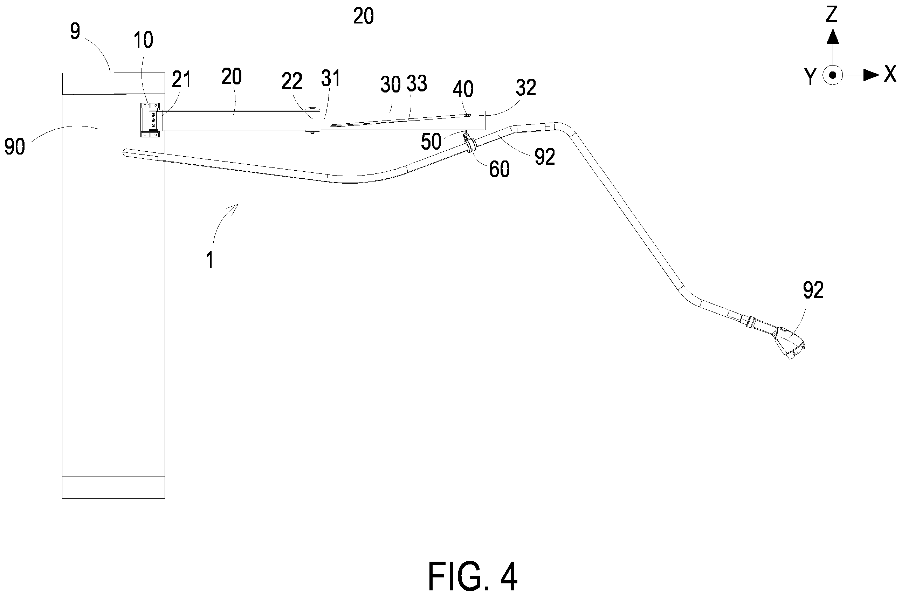

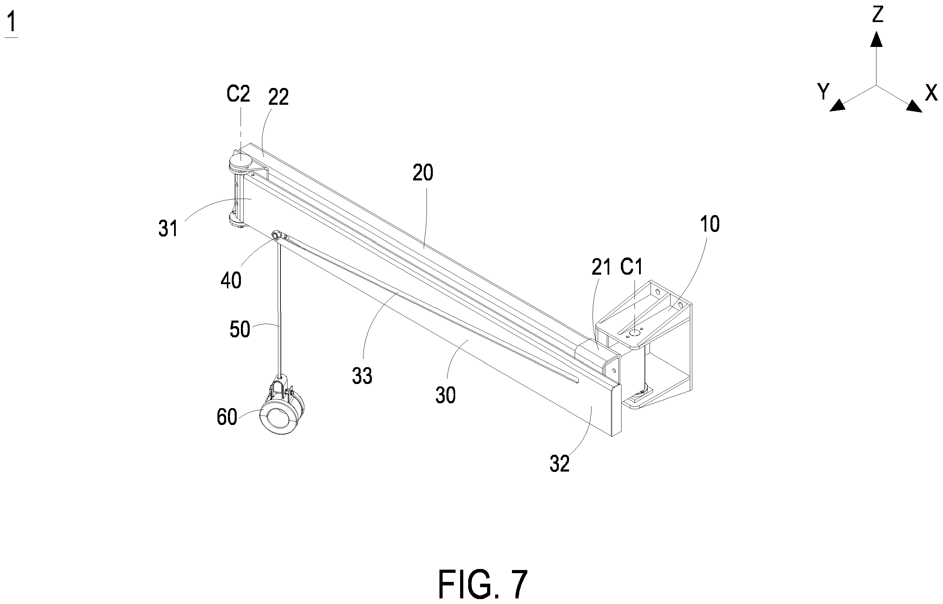

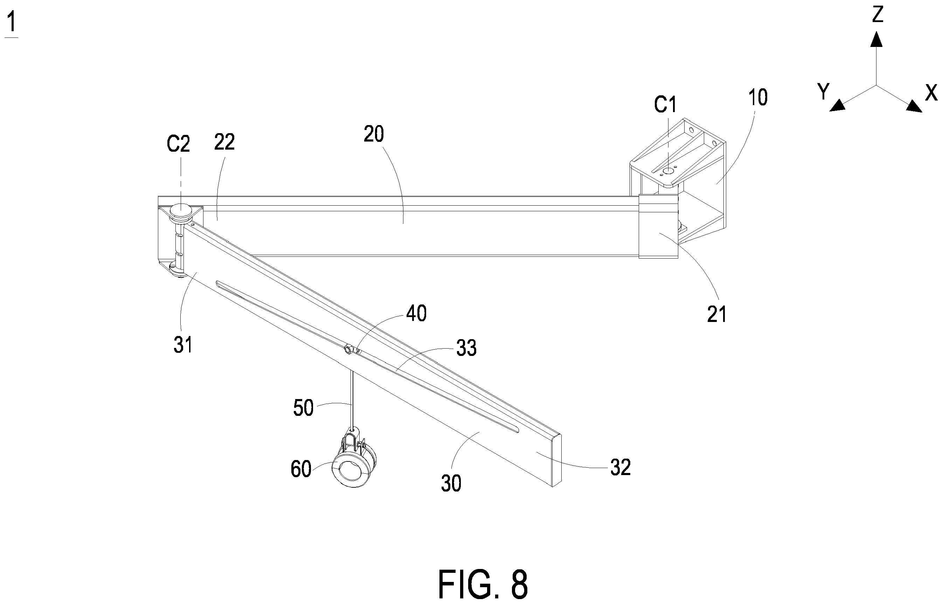

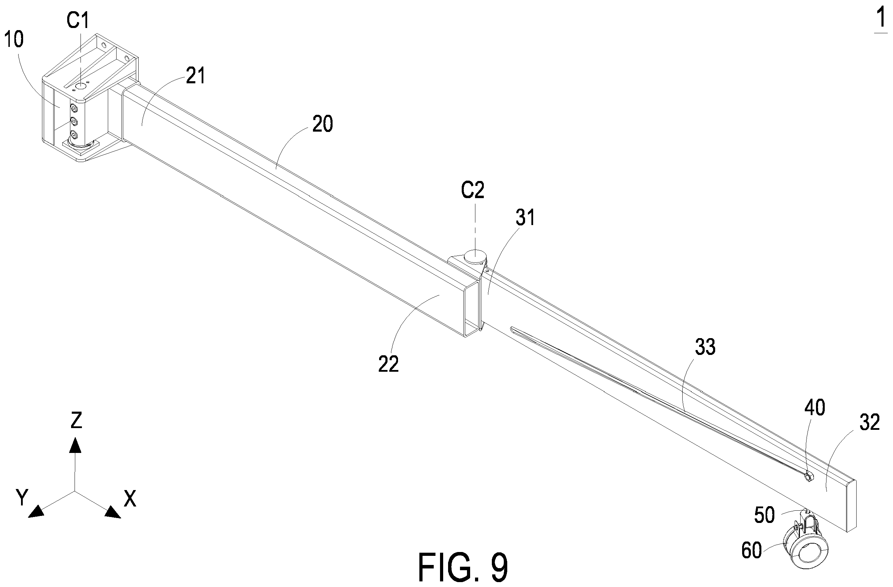

Notably, in the embodiment, the clamp component 60 is connected to the sliding component 40 through a rope 50. The rope 50 is wound on the sliding component 40 and includes one end 52 fixed to the clamp component 60 and another end 51 fixed to the third end 31 of the second arm 30. From the initial statue (referring to FIG. 7) to the fully expanded statue (referring to FIG. 9) through the transitional status (referring to FIG. 8), the distance between the sliding component 40 and the clamp component 60 is decreased. That is, when the user uses the charging gun 92 to pull the charging cable 91, the clamp component 60 fastening the charging cable 91 drives the sliding component 40 to move to the highest point of the sloped guiding module 33, the first arm 20 and the second arm 30 are fully expanded in front of the mounting base 10 along the X axial direction, and the middle section of the charging cable 91 is lifted to the highest point, as shown in FIG. 3 and FIG. 4. In that, the charging gun 92 can be stretched to the farthest point, and the charging cable 91 is hold by the swing-arm cable-management device 1 stably for charging the electric vehicle.

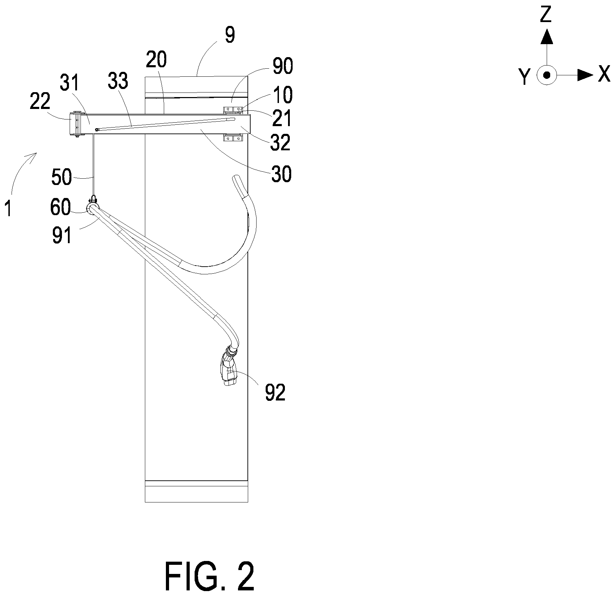

On the contrary, from the fully expanded statue (referring to FIG. 9) to the initial statue (referring to FIG. 7) through the transitional status (referring to FIG. 8), the distance between the sliding component 40 and the clamp component 60 is increased to the original length. That is, when the user releases the charging gun 92. The gravity of the charging cable 91 drives the sliding component 40 to automatically return to the lowest point of the sloped guiding module 33 through the clamp component 60. The first arm 20 and the second arm 30 are folded in the rear of the mounting base 10 along the inverse X axial direction and merged as the minimum length through the gravity action of the charging cable 91, and the middle section of the charging cable 91 is hold at a fixed height, so that the charging cable 91 and the charging gun 92 are moved back to the initial status, as shown in FIG. 1 and FIG. 2.

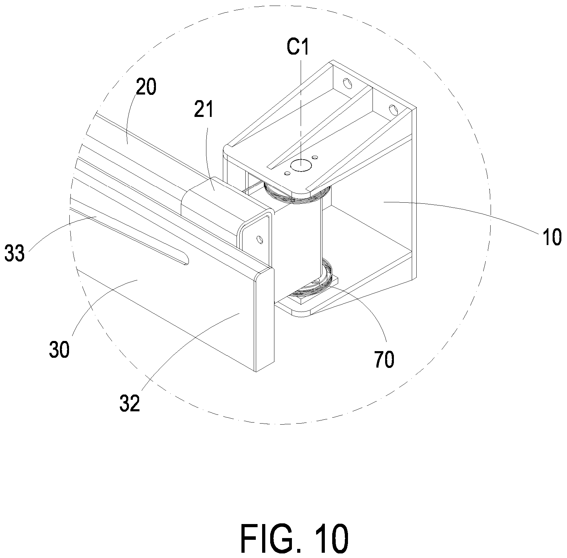

In the embodiment, the swing-arm cable-management device 1 further includes torsion springs 70 disposed around the first pivot shaft C1, as shown in FIG. 10. Similarly, the swing-arm cable-management device 1 further includes torsion springs 70 disposed around the second pivot shaft C2. The torsion springs 70 are configured to provide an elastic restoring force to keep the first arm 20 and the second arm 30 fold in the initial statue, as shown in FIG. 7. When the user uses the charging gun 92 to pull the charging cable 91, the elastic restoring force is overcome by the pulling force from the user, and then the first arm 20 and the second arm 30 are fully expanded to have a maximum length about 157 cm, so that the charging cable 91 is stretched and hold stably, and the charging gun 92 can be used to charge the electric vehicle. On the other hand, when the user has finished the operation of the charging gun 92 and releases the charging gun 92, the first arm 20 and the second arm 30 are fold to the initial statue due to the elastic restoring force of the torsion springs 70. At the same time, the sliding component 40 connected to the clamp component 60 is acted by the gravity of the charging cable 91 and automatically returns to the lowest point of the sloped guiding module 33. Thus, the charging cable 91 and the charging gun 92 are moved back to the initial status, as shown in FIG. 1 and FIG. 2. Certainly, the type and the installation of the torsion springs 70 are adjustable according to the practical requirements. The present disclosure is not limited thereto, and not redundantly described hereafter.

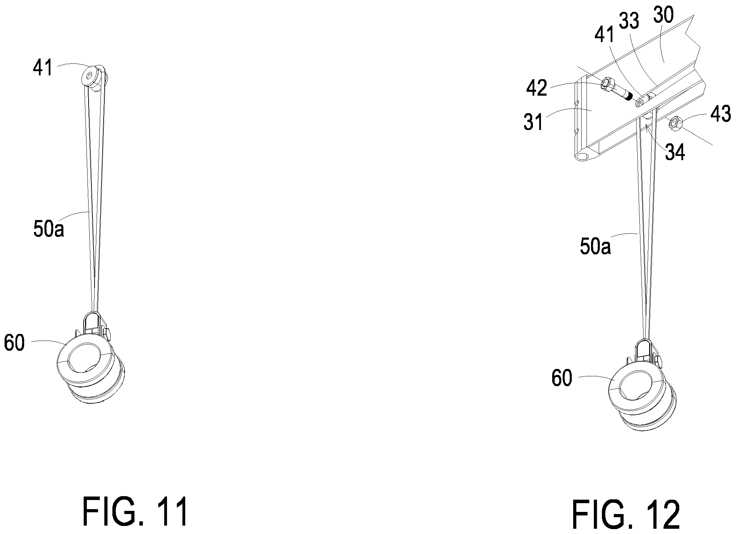

FIG. 11 to FIG. 15 show a swing-arm cable-management device according to a second embodiment of the present disclosure. In the embodiment, the structures, elements and functions of the swing-arm cable-management device 1a are similar to those of the swing-arm cable-management device 1 in FIG. 1 to FIG. 10, and are not redundantly described herein. In the embodiment, the clamp component 60 is connected to the sliding component 40 through a rope 50a. The rope 50a is wound on the sliding component 40 and includes two ends fixed to the clamp component 60. For installing the sliding component 40 on the guiding module 33, the main body 41 of the sliding component 40 is placed between the two guiding grooves of the guiding module 33, the horizontal shaft 42 passes through the two guiding grooves of the guiding module 33 and the main body 41 along the central axis of the sliding component 40, and then two ends of the horizontal shaft 42 are limited by the two fastening nuts 43 outside the opposite walls of the elongated hollow frame (i.e., the second arm 30), so that the sliding component 40 is slidably disposed on the guiding module 33. Afterward, the rope 50a is wound on the main body 41 through the bottom opening 34, and then the two ends of the rope 50a are fixed to the clamp component 60.

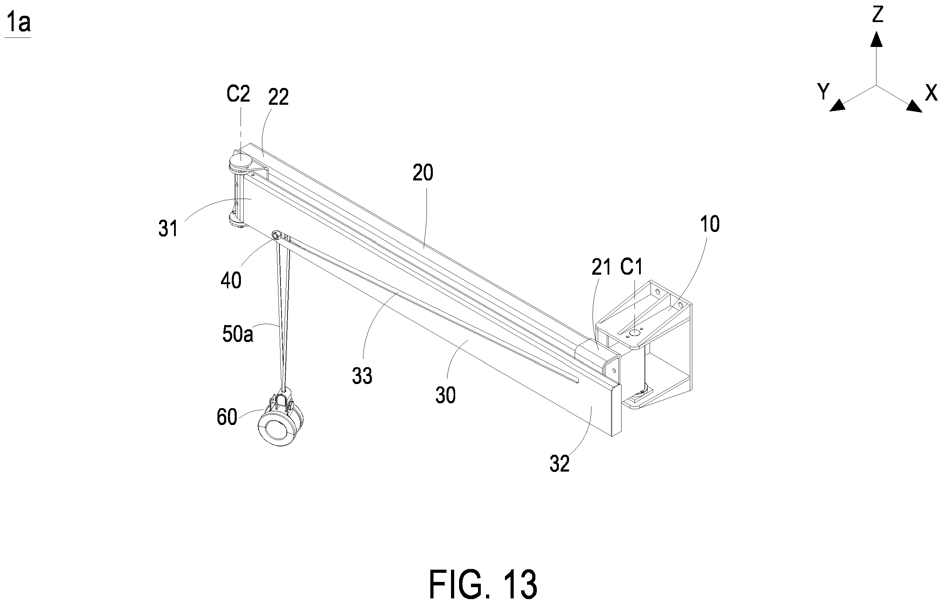

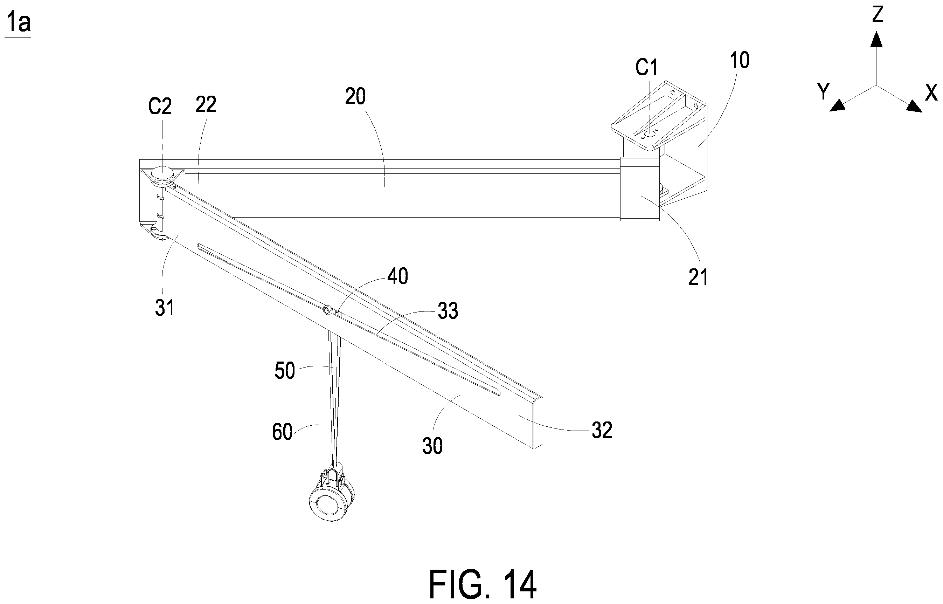

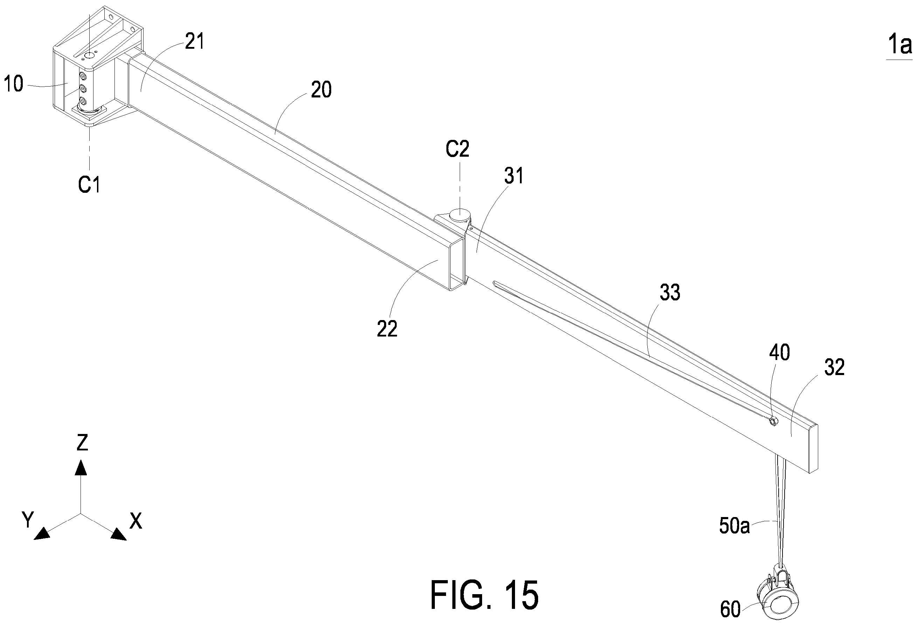

From the initial statue (referring to FIG. 13) to the fully expanded statue (referring to FIG. 15) through the transitional status (referring to FIG. 14), the distance between the sliding component 40 and the clamp component 60 is constant. That is, when the user uses the charging gun 92 to pull the charging cable 91, the clamp component 60 fastening the charging cable 91 drives the sliding component 40 to move to the highest point of the sloped guiding module 33, the first arm 20 and the second arm 30 are fully expanded in front of the mounting base 10 along the X axial direction, and the middle section of the charging cable 91 is slightly lifted to the highest point. The altitude changes are maintained within the height difference about 10 cm between the rear and the front end of the sloped guiding module 33. In that, the charging gun 92 can be stretched to the farthest point, and the charging cable 91 is hold by the swing-arm cable-management device 1a stably for charging the electric vehicle.

On the contrary, from the fully expanded statue (referring to FIG. 15) to the initial statue (referring to FIG. 13) through the transitional status (referring to FIG. 14), the distance between the sliding component 40 and the clamp component 60 is constant. That is, when the user releases the charging gun 92. The gravity of the charging cable 91 drives the sliding component 40 to automatically return to the lowest point of the sloped guiding module 33 through the clamp component 60. The first arm 20 and the second arm 30 are folded in the rear of the mounting base 10 along the inverse X axial direction and merged as the minimum length through the gravity action of the charging cable 91, and the middle section of the charging cable 91 is hold at a fixed height, so that the charging cable 91 and the charging gun 92 are moved back to the initial status (referring to FIG. 1 and FIG. 2). Certainly, the connection of the sliding component 40 and the clamp component 60 is adjustable according to the practical requirements. The present disclosure is not limited thereto. Certainly, the slope of the sloped guiding module 33, the sizes of the first arm 20 and the second arm 30 are adjustable according to the practical requirements. The present disclosure is not limited thereto, and not redundantly described herein.

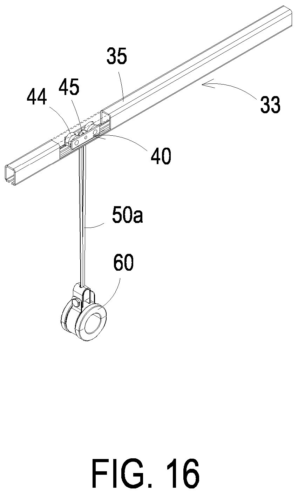

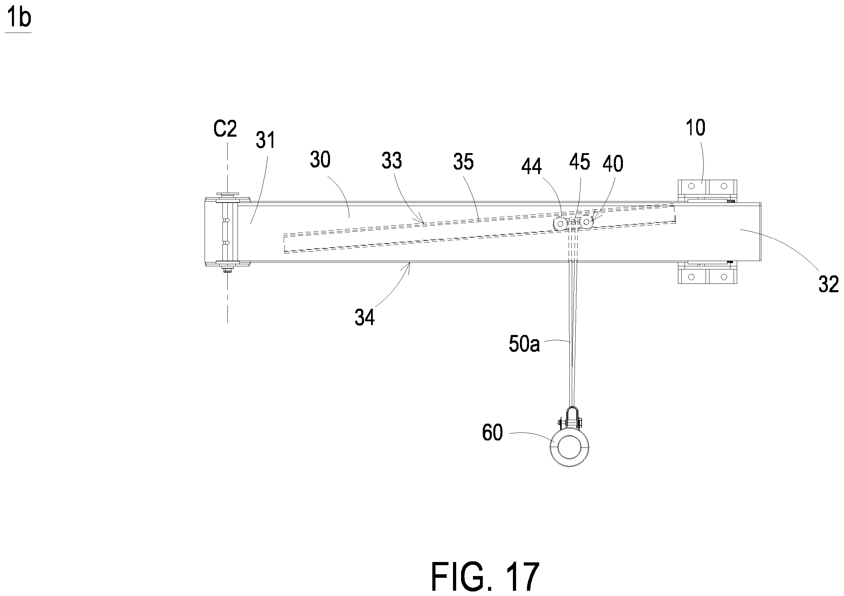

FIG. 16 and FIG. 17 show a swing-arm cable-management device according to a third embodiment of the present disclosure. In the embodiment, the structures, elements and functions of the swing-arm cable-management device 1b are similar to those of the swing-arm cable-management device 1 in FIG. 1 to FIG. 10, and are not redundantly described herein. In the embodiment, the guiding module 33 of the swing-arm cable-management device 1b further includes a tubular guiding rail 35 embedded obliquely in the second arm 30. The sliding component 40 includes a pulley set 44, and the pulley set 44 is slidably disposed in the tubular guiding rail 35. The tubular guiding rail 35 includes a rear end and a front end opposite to each other, and the rear end is disposed adjacent to the third end 31 and lower than the front end disposed adjacent to the fourth end 32. Preferably but not exclusively, the lowest point of the tubular guiding rail 35 is disposed adjacent to the third end 31 of the second arm 30; and the highest point of the tubular guiding rail 35 is disposed adjacent to the fourth end 32. In the embodiment, the clamp component 60 is connected to the pulley set 44 through a rope 50a. The rope 50a is wound on the holding pin 45 of the pulley set 44 and includes two ends fixed to the clamp component 60. Certainly, the slop of the tubular guiding rail 35, the types of the tubular guiding rail 35 and the pulley set 44 are adjustable according to the practical requirements, and the present disclosure is not limited thereto. In addition, the functions of the tubular guiding rail 35 and the pulley set 44 are similar to those of the guiding module 33 and the sliding component 40 in the above embodiments, and are not redundantly described herein.

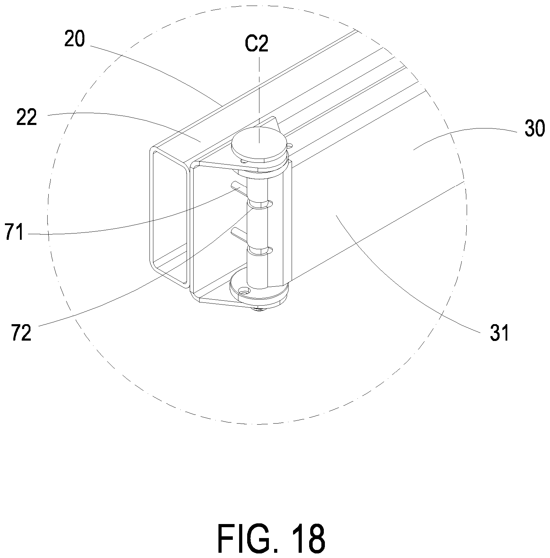

Notably, in the embodiment, the swing-arm cable-management device 1, 1a or 1b further has a limiting mechanism for limiting the rotation angle of the first arm 20 and the second arm 30. Preferably but not exclusively, the limiting mechanism includes a limiting pin 71 and a limiting groove 72 spatially corresponding to each other and arranged adjacent to the second pivot shaft C2, as shown in FIG. 18. In the embodiment, the limiting groove 72 is disposed on third end 31 of the second arm 30 and arranged around the second pivot shaft C2 of 180°. One end of the limiting pin 71 is disposed on the second end 22 of the first arm 20 and another end of the limiting pin 71 is slidably received in the limiting groove 72. When the limiting pin 71 is limited by the one end of the limiting groove 72, and the first arm 20 and the second arm 30 are operated in the initial statue (referring to FIG. 7), the second arm 30 is attached to each other in parallel. Namely, the rotation angle of the second arm 30 relative to the first arm 20 in the initial status is 0°. On the contrary, when the limiting pin 71 limited by another end of the limiting groove 72, and the first arm 20 and the second arm 30 are operated in the fully expanded statue (referring to FIG. 9), the first arm 20 and the second arm 30 are unfolded and parallel to each other. Namely, the rotation angle of the second arm 30 relative to the first arm 20 in the fully expanded status is 180°. With the limiting mechanism, the rotation angle of the second arm 30 relative to the first arm 20 is ranged from 0° to 180°. In other embodiments, the limiting mechanism is provided to limit the rotation angle of the first arm 20 relative the mounting base 10. Certainly, the arrangement, the rotation angle of the limiting mechanism are adjustable according to the practical requirement, but not redundantly described herein.

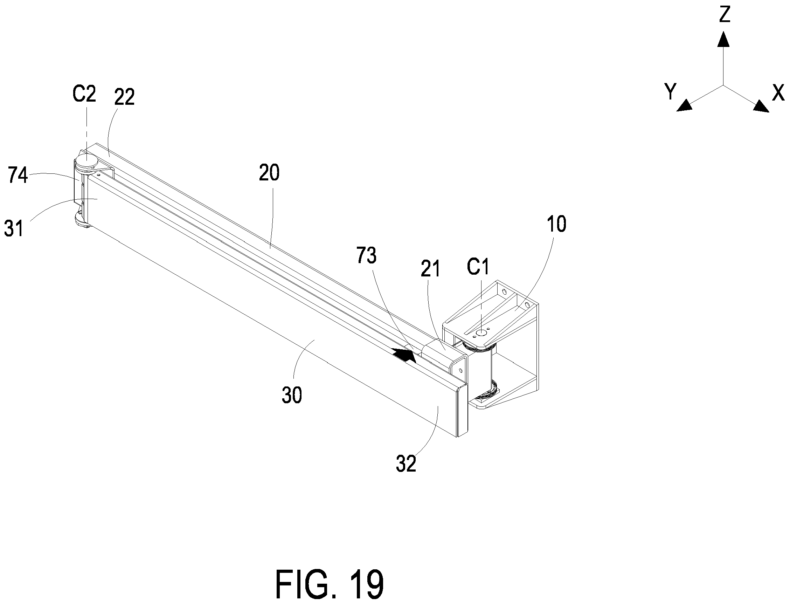

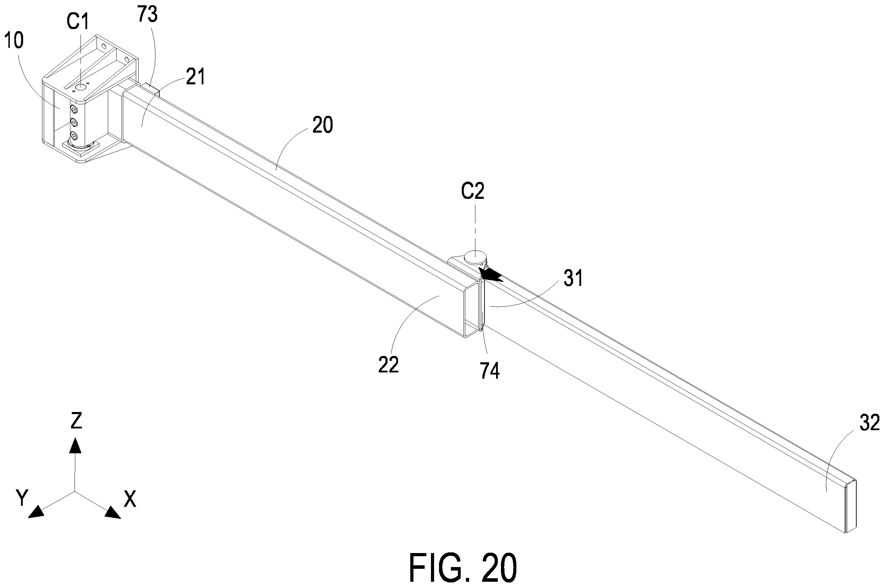

Furthermore, in an embodiment, the above limiting mechanism is omitted, but the swing-arm cable-management device 1, 1a or 1b further includes buffering elements 73, 74, which are configured to provide a buffering function for collisions during rotation and swing between the first arm 20 and the second arm 30. Please refer to FIG. 19 and FIG. 20. Preferably but not exclusively, the buffering element 73 is a long elastic gasket, disposed on the first end 21 of the first arm 20, arranged adjacent to the first the pivot shaft C1, and spatially corresponding to the fourth end 32 of the second arm 30. Preferably but not exclusively, the buffering element 74 is a long elastic gasket, disposed on the second end 22 of the first arm 20, arranged adjacent to the second the pivot shaft C2, and spatially corresponding to the third end 31 of the second arm 30. As shown in FIG. 19, in the initial statue, the fourth end 32 of the second arm 30 is rotated to attach to the first end 21 of the first arm 20, and the buffering element 73 located between the first end 21 and the fourth end 32 helps cushion impact. Similarly, as shown in FIG. 20, in the fully expanded statue, the third end 31 of the second arm 30 is rotated to attach to the second end 22 of the first arm 20, and the buffering element 74 located between the second end 22 and the third end 31 helps cushion impact. Certainly, in other embodiment, the arrangements of the buffering elements 73, 74 are adjustable according to the practical requirements. The present is not limited thereto.

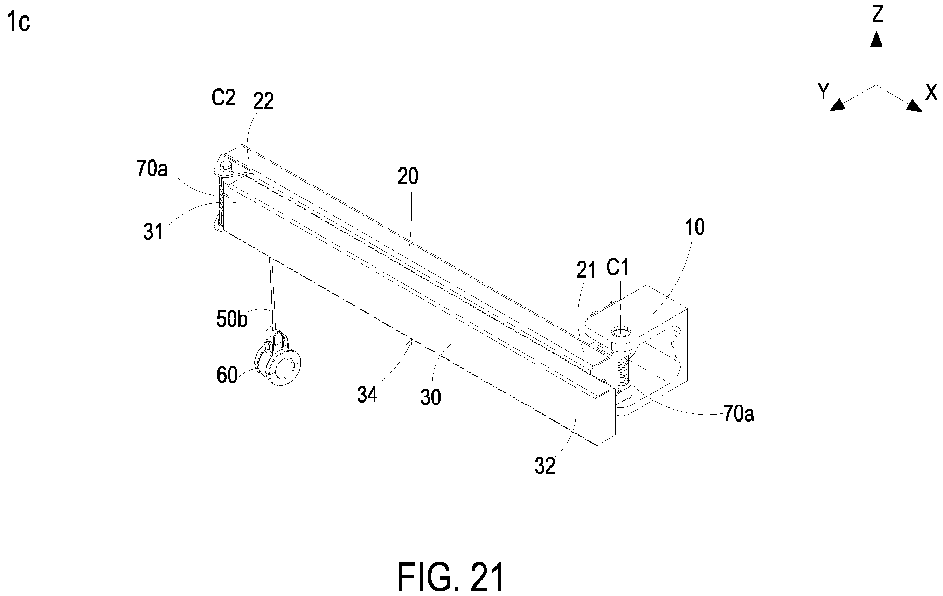

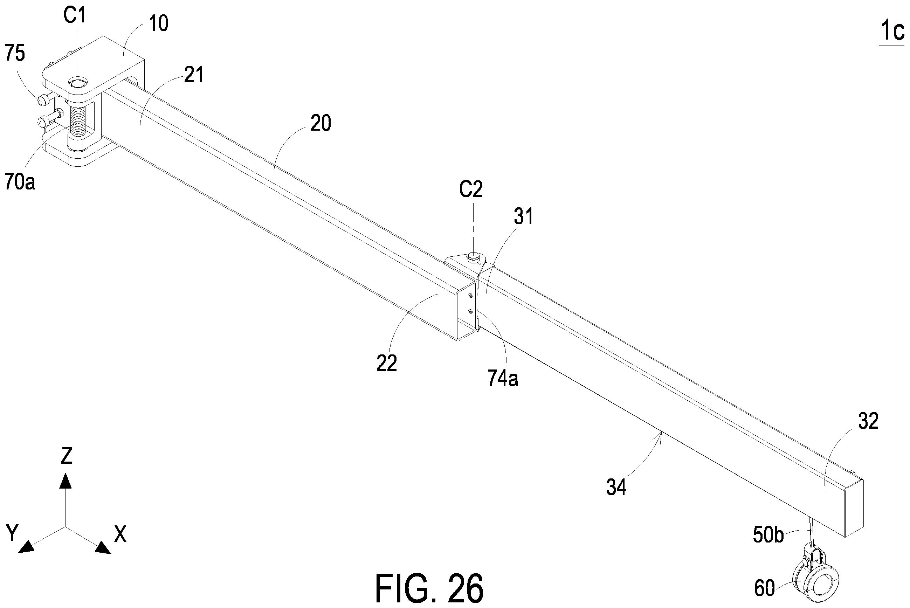

FIG. 21 and FIG. 26 show a swing-arm cable-management device according to a fourth embodiment of the present disclosure. In the embodiment, the structures, elements and functions of the swing-arm cable-management device 1c are similar to those of the swing-arm cable-management device 1 in FIG. 1 to FIG. 10, and are not redundantly described herein. In the embodiment, the guiding module 33 of the swing-arm cable-management device 1c further includes a guiding rod 36 embedded obliquely in the second arm 30. The sliding component 40a is slidably sleeved on the guiding rod 36. The guiding rod 36 includes a rear end and a front end opposite to each other, and the rear end is disposed adjacent to the third end 31 and lower than the front end disposed adjacent to the fourth end 32. Preferably but not exclusively, the lowest point of the guiding rod 36 is disposed adjacent to the third end 31 of the second arm 30; and the highest point of the guiding rod 36 is disposed adjacent to the fourth end 32 of the second arm 30. In the embodiment, the clamp component 60 is connected to the sliding component 40a through a rope 50b. One end of the rope 50b is connected to the sliding component 40a and another end of the rope 50b is fixed to the clamp component 60. Certainly, the slop of the guiding rod 36, the types of the guiding rod 36 and the sliding component 40a are adjustable according to the practical requirements, and the present disclosure is not limited thereto. In addition, the functions of the guiding rod 36 and the sliding component 40a are similar to those of the guiding module 33 and the sliding component 40 in the above embodiments, and are not redundantly described herein.

In the embodiment, the swing-arm cable-management device 1c further includes torsion springs 70a disposed around the first pivot shaft C1 and the second pivot shaft C2, respectively. Preferably but not exclusively, the type of torsion springs 70a is different from the torsion spring 70 in the above embodiment, but it can also be configured to provide the elastic restoring force to keep the first arm 20 and the mounting base 10 or/and the second arm 30 and the first arm 20 folded in the initial statue. In other embodiments, the type and the arrangement of the torsion springs 70a are adjustable according to the practical requirements. In addition, the functions of the torsion springs 70a are similar to those of the torsion springs 70 in the above embodiments, and are not redundantly described herein.

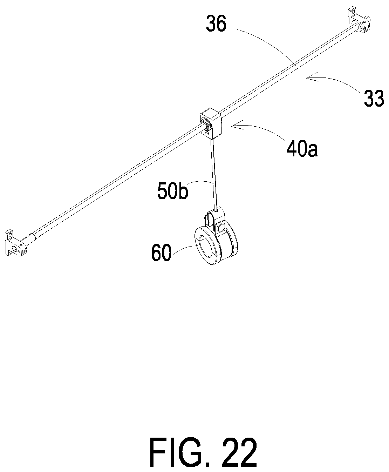

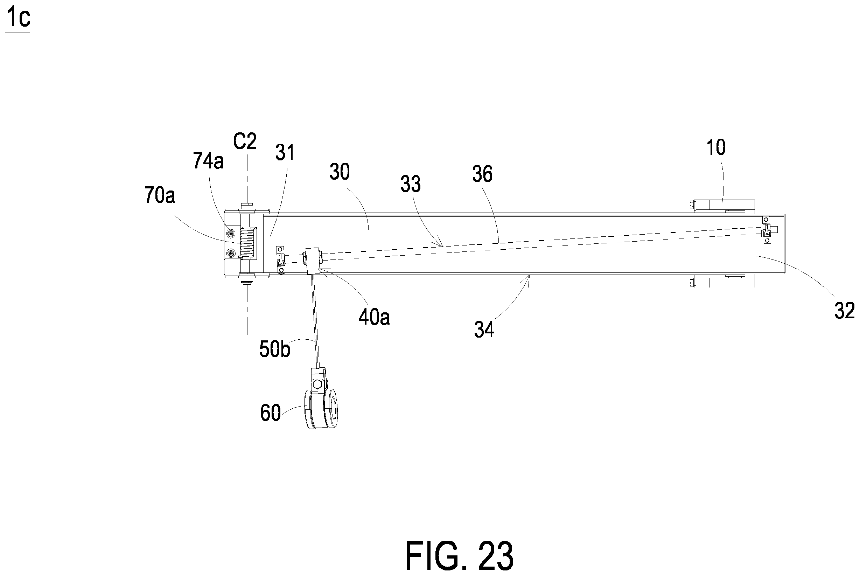

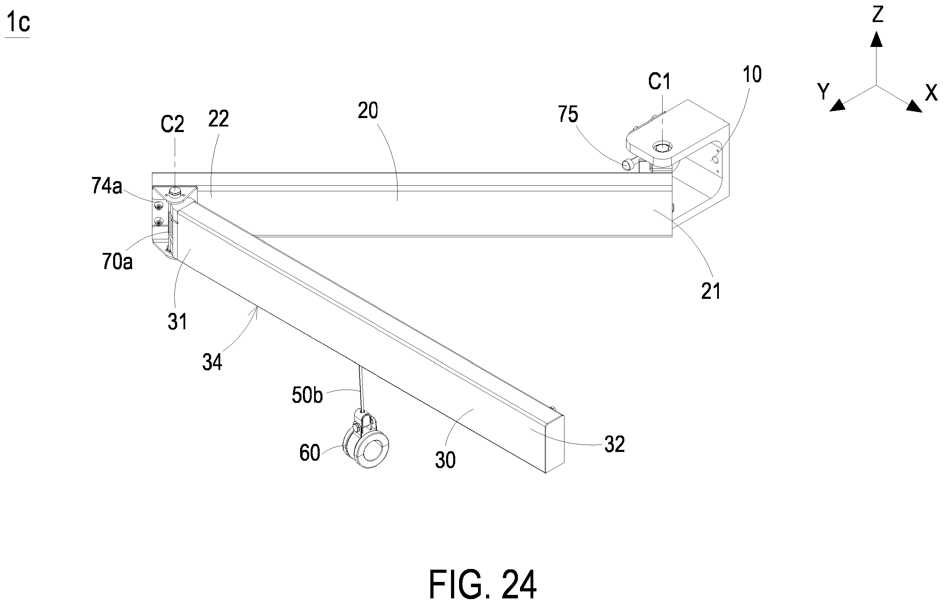

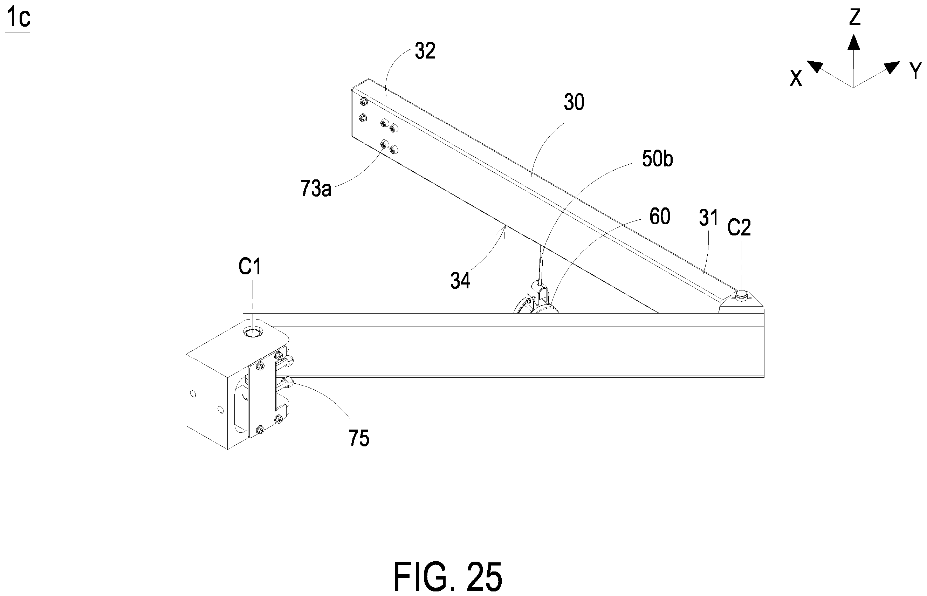

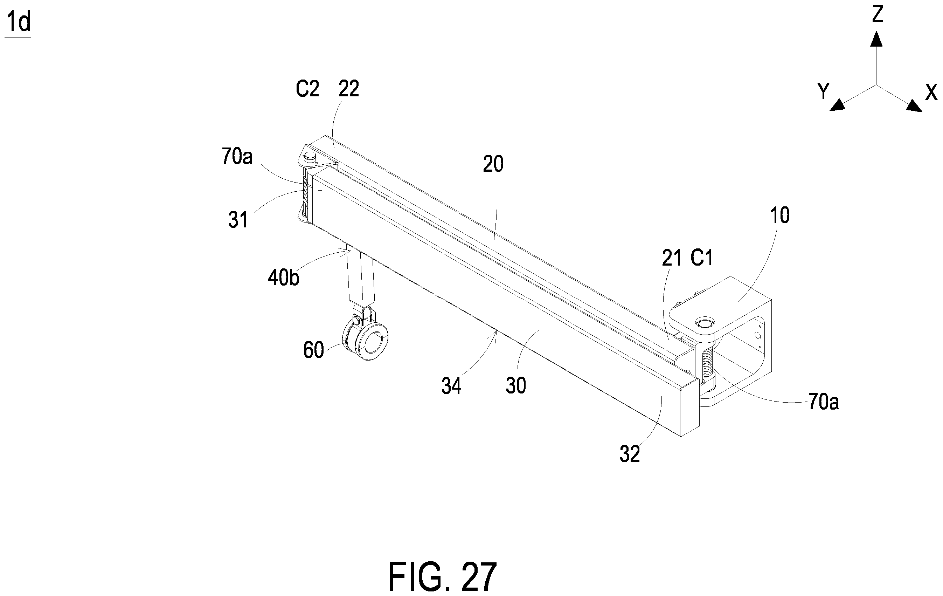

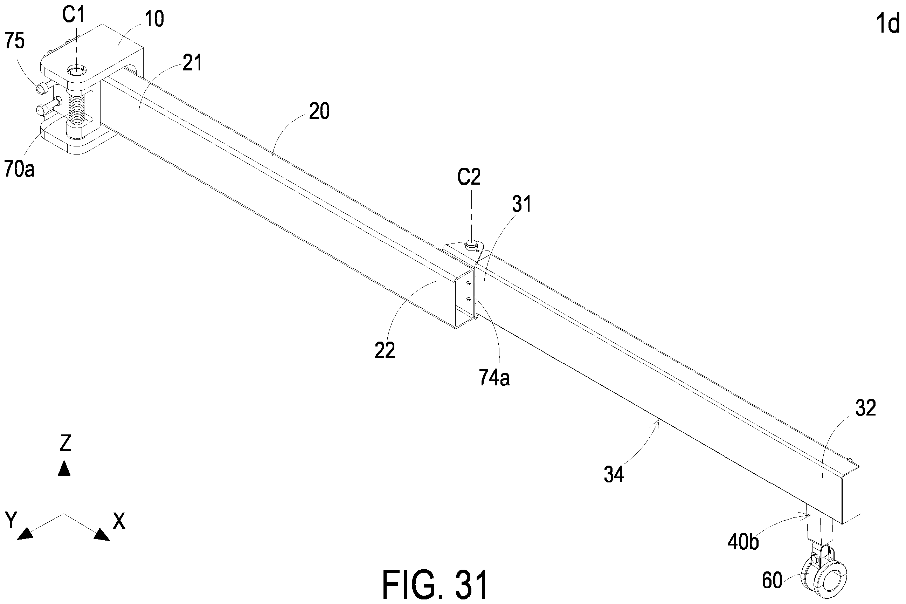

FIG. 27 and FIG. 31 show a swing-arm cable-management device according to a fifth embodiment of the present disclosure. In the embodiment, the structures, elements and functions of the swing-arm cable-management device 1d are similar to those of the swing-arm cable-management device 1c in FIG. 21 to FIG. 26, and are not redundantly described herein. In the embodiment, the guiding module 33 of the swing-arm cable-management device 1d includes a guiding rod 36 embedded obliquely in the second arm 30. The sliding component 40b is slidably sleeved on the guiding rod 36, and connected to the clamp component 60 through the bottom opening 34. The guiding rod 36 includes a rear end and a front end opposite to each other, and the rear end is disposed adjacent to the third end 31 and lower than the front end disposed adjacent to the fourth end 32. Preferably but not exclusively, the lowest point of the guiding rod 36 is disposed adjacent to the third end 31 of the second arm 30; and the highest point of the guiding rod 36 is disposed adjacent to the fourth end 32 of the second arm 30. In the embodiment, the sliding component 40b is further extended downward and connected to the clamp component 60 through the bottom opening 34. Certainly, the slop of the guiding rod 36, the types of the guiding rod 36 and the sliding component 40b are adjustable according to the practical requirements, and the present disclosure is not limited thereto. In addition, the functions of the guiding rod 36 and the sliding component 40b are similar to those of the guiding module 33 and the sliding component 40 in the above embodiments, and are not redundantly described herein.

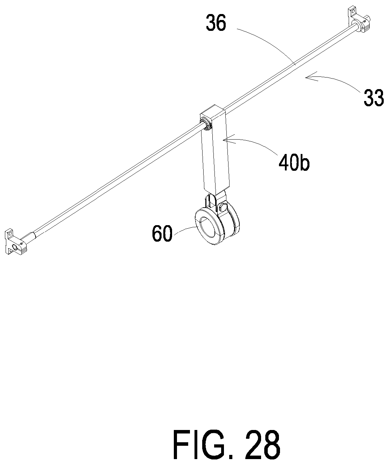

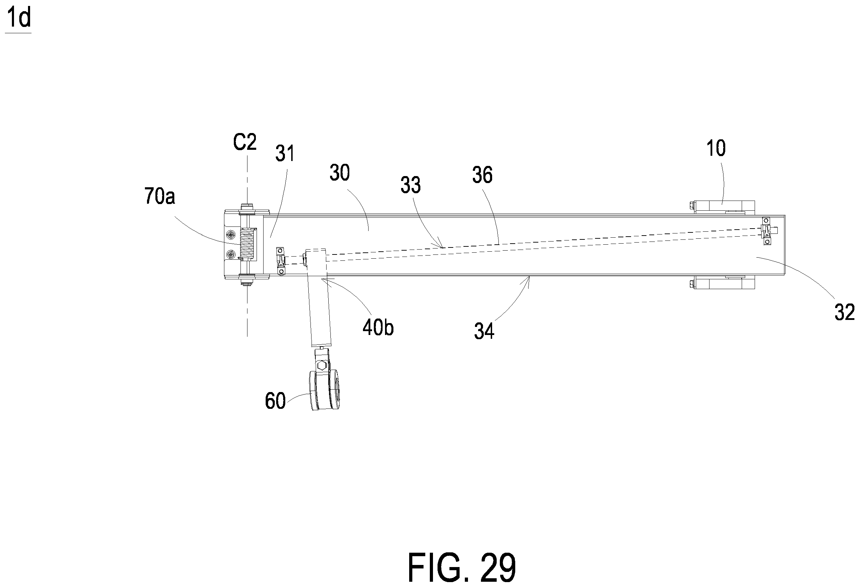

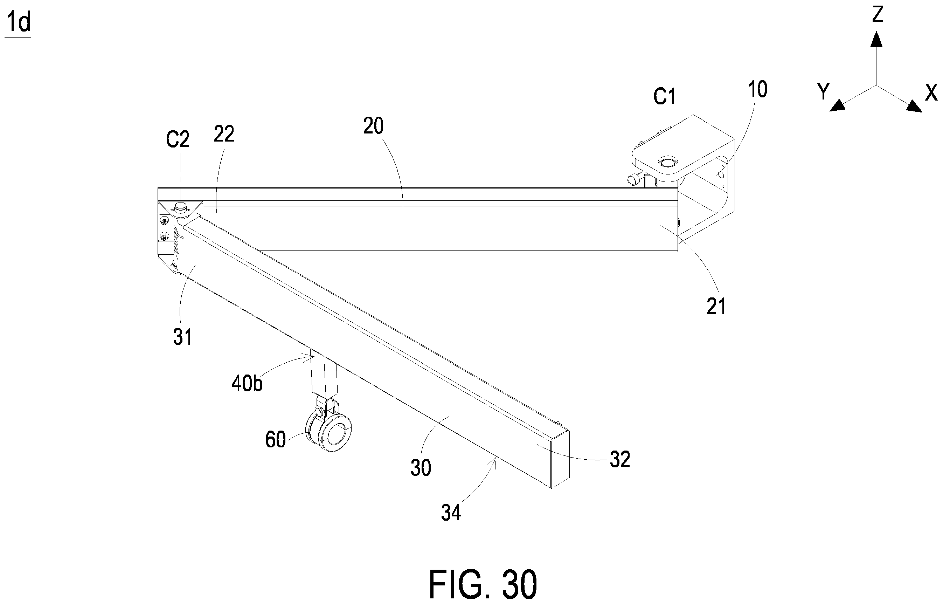

Please refer to FIG. 21 to FIG. 31. Notably, in the above embodiments, the swing-arm cable-management devices 1c, 1d include the buffering elements 73a, 74a, 75, which are configured to provide a buffering function for collisions when the swing-arm cable-management devices 1c, 1d are operated. In the embodiment, the buffering element 73a is disposed on the fourth end 32 of the second arm 30, spatially corresponding to the first end 21 of the first arm 20, and configured to provide the buffering function when the second arm 30 is folded relative to first arm 20. In other embodiments, the buffering element 73a is disposed between the fourth end 32 and the first end 21 to provide the buffering function. The function of the buffer element 73a is similar to that of the buffer element 73 in the above embodiment (referring to FIG. 19). The type and the arrangement of the buffering element 73a are adjustable according to the practical requirements, and not redundantly described herein. In the embodiment, the buffering element 74a is disposed on the second end 22 of the first arm 20, spatially corresponding to the third end 31 of the second arm 30, and configured to provide the buffering function when the second arm 30 is folded relative to first arm 20. In other embodiments, the buffering element 74a is disposed between the second end 22 and the third end 31 to provide the buffering function. The function of the buffer element 74a is similar to that of the buffer element 74 in the above embodiment (referring to FIG. 20). The type and the arrangement of the buffering element 74a are adjustable according to the practical requirements, and not redundantly described herein. In the embodiment, the buffering element 75 is disposed on the mounting base 10, spatially corresponding to the first end 21 of the first arm 20, and configured to provide the buffering function when the first arm 20 is folded relative to mounting base 10. In other embodiments, the buffering element 75 is disposed between the mounting base 10 and the first end 21 to provide the buffering function. Certainly, the type and the arrangements of the buffering elements 75 are adjustable according to the practical requirements. The present is not limited thereto. The present disclosure is not limited thereto and not redundantly described hereafter.

In summary, the present disclosure provides a swing-arm cable-management device holding an electric vehicle charging cable by connecting a clamp component to a sliding component on a sloped guiding module and combining a swing arm, so as to manage the electric vehicle charging cable when in use and idle, avoid damage to the charging cable and the charging gun head. Furthermore, by connecting a clamp component to a sliding component disposed on a sloped guiding module and disposing the sloped guiding module on a multi-section swing arms with torsion springs, a basic function of expanded support for the charging gun and the charging cable is achieved. It also provides the function of automatically returning the charging gun and charging cable to avoid damage to the charging gun and charging cable. When the charging gun is not in use, the multi-section swing arms of the swing-arm cable-management device is folded to a minimum length through the action of the torsion springs. At the same time, the sliding component connected to the clamp component of the charging cable and slidably disposed on the sloped guiding module is automatically returned by the gravity action of the charging cable, and moved to the lowest point of the sloped guiding module, thereby driving the charging cable to an initial status with the smallest footprint. On the other hand, when the user uses the charging gun to pull the charging cable, the clamp component of the charging cable drives the sliding component to move to the highest point of the sloped guiding module, and at the same time the multi-section swing arms are fully expanded, so that the charging gun can be used to charge the electric vehicle in the charging operation easily. When the user has finished the operation of the charging gun, he only needs to release the charging gun. The gravity of the charging cable drives the sliding component to automatically return to the lowest point of the sloped guiding module through the clamp component. The multi-section swing arm is folded and merged as the minimum length through the action of the torsion spring, so that the charging cable and the charging gun are moved back to the initial status. With the swing-arm cable-management device of the present disclosure, no matter whether the multi-section swing arms are unfolded or folded, the charging gun and the charging cable will not touch the ground. It reduces the risk of damage to the charging gun and the charging cable. In addition, it allows to add a limiting mechanism for limiting a rotation angle of the first arm and the second arm, or add buffering elements for providing a buffering function between the first arm and the second arm. Compared with the conventional cable management device that uses counterweights and pulleys merely, the multi-section arm-folding structure constructed by the multi-section swing arms is significantly reduced in both volume and weight. It not only simplifies the structure, but also reduces the cost. The present disclosure includes the industrial applicability and the inventive steps.

## Claims

1. A swing-arm cable-management device (1, 1a, 1b, 1c, 1d) **characterized by** comprising:
a mounting base (10) configured to be mounted on a lateral wall (90) of a charging machine (9);
a first arm (20) comprising a first end (21) and a second end (22) opposite to each other, wherein the first end (21) is pivotally connected to the mounting base (10) through a first pivot shaft (C1) perpendicular to the ground, so that the first arm (20) is allowed to rotate relative to the mounting base (10) around the first pivot shaft (C1);
a second arm (30) comprising a third end (31) and a fourth end (34) opposite to each other, wherein the third end (31) is pivotally connected to the second end (22) of the first arm (20) through a second pivot shaft (C2) perpendicular to the ground, so that the second arm (30) is allowed to rotate relative to the first arm (20) through the second pivot shaft (C2);
a guiding module (33) disposed on the second arm (30) and slopped to increase height along a horizontal direction from third end (31) to the fourth end (32), wherein the guiding module (33) comprises a rear end and a front end opposite to each other, and the rear end is disposed adjacent to the third end (31) and lower than the front end disposed adjacent to the fourth end (32);
a sliding component (40, 40a, 40b) slidably disposed on the guiding module (33); and
a clamp component (60) connected to the sliding component (40, 40a, 40b) and configured to fasten a charging cable (91) of the charging machine (9), wherein when the charging cable (91) is idle, the clamp component (60) is pulled downwardly to drive the sliding component (40, 40a, 40b) to move to the rear end of the guiding module (33) due to a gravity action of the charging cable (91), wherein when the charging cable (91) is in use and expanded by a charging gun (92), the clamp component (60) is pulled away from the mounting base (10) to drive the sliding component (40, 40a, 40b) to move to the front end of the guiding module (33) due to a pull action on the charging gun (92).

2. The swing-arm cable-management device (1, 1a, 1b, 1c, 1d) according to claim 1, wherein the charging machine (9) is disposed on a ground and the lateral wall (90) of the charging machine (9) is perpendicular to the ground, the mounting base (10) is mounted on the lateral wall (90) of the charging machine (9) and located adjacent to a top of the charging machine (9), and the charging cable (91) is connected between the lateral wall (90) of the charging machine (9) and the charging gun (92).

3. The swing-arm cable-management device (1, 1a, 1b, 1c, 1d) according to claim 1, further comprising at least one torsion spring (70, 70a), wherein the at least one torsion spring (70, 70a) is disposed around the first pivot shaft (C1) or/and the second pivot shaft (C2) and configured to provide an elastic restoring force to keep the first arm (20) and the second arm (30) fold in an initial statue.

4. The swing-arm cable-management device (1, 1a, 1b, 1c, 1d) according to claim 1, wherein when the clamp component (60) on the first arm (20) is pulled downwardly to drive the sliding component (40, 40a, 40b) to move to the rear end of the guiding module (33) due to the gravity action of the charging cable (91), the first arm (20) and the second arm (30) are folded and attached to the lateral wall (90) of the charging machine (9), wherein when the clamp component (60) is pulled away from the mounting base (10) to drive the sliding component (40, 40a, 40b) to move to the front end of the guiding module (33) due to the pull action on the charging gun (92), the first arm (20) and the second arm (30) are unfolded in a front of the charging machine (9).

5. The swing-arm cable-management device (1, 1a, 1b, 1c) according to claim 1, wherein the first arm (20) and the second arm (30) are an elongated hollow frame, respectively.

6. The swing-arm cable-management device (1, 1a) according to claim 5, wherein the guiding module (33) comprises two guiding grooves, the two guiding grooves pass through two opposite walls of the second arm (30), the sliding component (40) is located between the two guiding grooves and comprises a horizontal shaft (42) and two fastening nuts (43), and the horizontal shaft (42) and the two fastening nuts (43) are configured to install the sliding component (40) on the guiding module (33).

7. The swing-arm cable-management device (1, 1a)according to claim 5, wherein the elongated hollow frame of the second arm (30) comprises a bottom opening (34), wherein the sliding component (40) is placed between two guiding grooves of the guiding module (33) and comprises a horizontal shaft (42), and the horizontal shaft (42) passes through the two guiding grooves of the guiding module (33) and a central axis of the sliding component (40), wherein two ends of the horizontal shaft (42) are limited by two fastening nuts (43), and the two fastening nuts (43) are located outside two opposite walls of the elongated hollow frame, respectively, so that the sliding component (40) is slidably disposed on the guiding module (33).

8. The swing-arm cable-management device (1, 1a) according to claim 7, wherein the sliding component (40) and the clamp component (60) are connected through a rope (50, 50a), and the rope (50, 50a) passes through the bottom opening (34).

9. The swing-arm cable-management device (1) according to claim 8, wherein the rope (50) is wound on the sliding component and comprises an end fixed to the clamp component (60) and another end fixed to the third end (31) of the second arm (30).

10. The swing-arm cable-management device (1a) according to claim 8, wherein the rope (50a) is wound on the sliding component (40) and comprises two ends fixed to the clamp component (60).

11. The swing-arm cable-management device (1b) according to claim 5, wherein the elongated hollow frame of the second arm (30) comprises a bottom opening (34), wherein the guiding module comprises a tubular guiding rail (35) obliquely embedded in the second arm (30), and the sliding component (40) comprises a pulley set (44) slidably disposed in the tubular guiding rail (35), wherein the sliding component (40) and the clamp component (60) are connected through a rope (50a), and the rope (50a) passes through the bottom opening (34).

12. The swing-arm cable-management device (1c) according to claim 5, wherein the elongated hollow frame of the second arm (30) comprises a bottom opening (34), wherein the guiding module comprises a guiding rod (36) obliquely embedded in the second arm (30), and the sliding component (40a) is slidably sleeved on the guiding rod (36) and connected to the clamp component (60) through the bottom opening (34), wherein the sliding component (40a) and the clamp component (60) are connected through a rope (50b), and the rope (50b) passes through the bottom opening (34).

13. The swing-arm cable-management device (1, 1a, 1b, 1c, 1d) according to claim 1, further comprising a limiting mechanism, wherein the limiting mechanism is disposed between the second end (22) of the first arm (20) and the third end (31) of the second arm (30), and configured to limit rotation angle of the first arm (20) and the second arm (30).

14. The swing-arm cable-management device (1c, 1d) according to claim 1, further comprising a buffering element (73a, 74a, 75), wherein the buffering element (73a, 74a, 75) is disposed between the mounting base (10) and the first end (21) and between the fourth end (32) and the first end (21), and configured to provide a buffering function for collisions when the first arm (20) is folded relative to the mounting base (10) and the second arm (30) is folded relative to the first arm (20).

15. The swing-arm cable-management device (1, 1a, 1b) according to claim 1, further comprising a buffering element (73, 74), wherein the buffering element (73, 74) is disposed between the second end (22) and the third end (31), and configured to provide a buffering function for collisions when the second arm (30) is unfolded relative to the first arm (20).
